# EUROPEAN PATENT SPECIFICATION

(11) **EP 1 778 532 B1**
(45) Date of publication and mention of the grant of the patent: **22.04.2009**
(21) Application number: 05779874.6
(22) Date of filing: 29.07.2005
(51) Int. Cl.: B62D 1/04

(54) **VEHICLE STEERING WHEEL**
FAHRZEUGLENKRAD
VOLANT DE DIRECTION DE VEHICULE

(30) Priority: 30.07.2004 IT BO20040484
(43) Date of publication of application: 02.05.2007
(73) Proprietor: FERRARI S.p.A., 41100 Modena (IT)
(72) Inventor: STEFANI, Giovanni, I-41049 Sassuolo (IT)
(74) Representative: Jorio, Paolo
(86) International application number: PCT/IB2005/002609
(87) International publication number: WO 2006/013470

(56) References cited:
- EP-A- 1 391 343
- EP-A- 1 400 429
- DE-A1- 19 920 525
- DE-U1- 20 014 731
- DE-U1- 20 300 016

## Description

### TECHNICAL FIELD

The present invention relates to a vehicle steering wheel.

The steering wheel according to the present invention is particularly advantageous for use in high-performance sports vehicles, and comprises a box body fixed to the steering column of the vehicle and housing an air bag; and a circular member operated by the driver of the vehicle to control a steering shaft mounted for rotation inside the steering column.

The steering wheel also comprises at least one control lever projecting radially outwards from the steering column and for operating, for example, a direction indicator of the vehicle; and at least one actuating member mounted between said circular member and said control lever to operate the vehicle transmission.

Document EP 1 400 429 A1 discloses a steering wheel comprising a hub portion mounted to a rear terminal end of a steering shaft; two rim portions connecting the left and right ends of the hub portion to a lower end of the hub portion; and a pair of control levers fitted to the hub portion.

### BACKGROUND ART

Since the control lever is operated by the driver of the vehicle with both hands on said circular member, known steering wheels of the above type have several drawbacks, mainly due to the control lever - because of its location on the steering column and with respect to the transmission actuating member - being relatively far away from the circular member and, hence, from the driver's hands. Operation of the control lever is therefore relatively awkward, and calls for a relatively small transmission actuating member to avoid further impeding grip of the control lever.

### DISCLOSURE OF INVENTION

It is an object of the present invention to provide a vehicle steering wheel designed to eliminate the above drawbacks, and which is cheap and easy to produce.

According to the present invention, there is provided a vehicle steering wheel as recited in Claim 1.

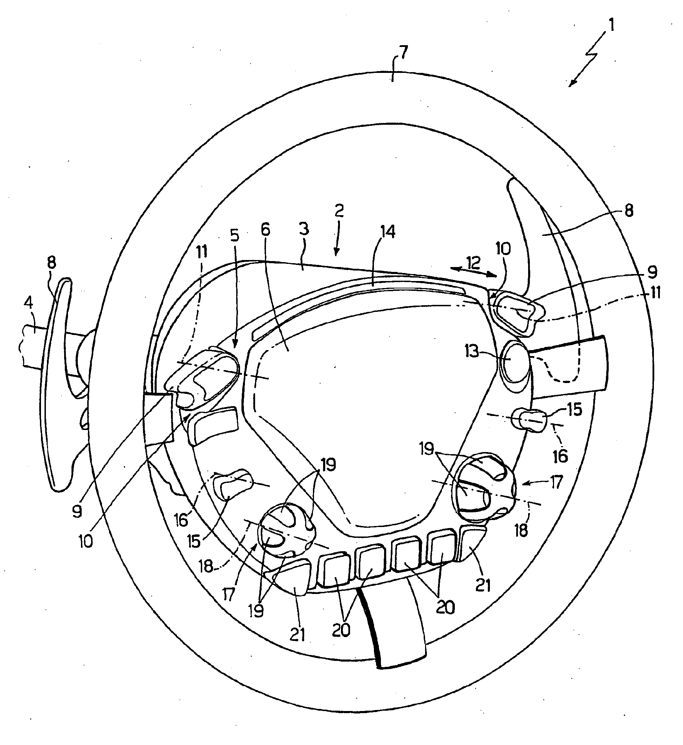

### BRIEF DESCRIPTION OF THE DRAWING

The present invention will be described with reference to the accompanying drawing, which shows a schematic view in perspective of a non-limiting embodiment.

### BEST MODE FOR CARRYING OUT THE INVENTION

Number 1 in the accompanying drawing indicates as a whole a steering wheel for steering the wheels (not shown) of a high-performance sports vehicle (not shown).

Steering wheel 1 comprises a box body 2 in turn comprising a substantially cup-shaped body 3 fixed to a free end of a steering column 4 and defining a cavity (not shown), which is positioned with its concavity facing the driver of the vehicle, opens outwards at a front face 5 of body 3, and is closed by a front cover 6 to define a chamber for housing an air bag (not shown).

Steering wheel 1 also comprises a circular member 7, which extends about body 3, is fitted in angularly fixed manner to a steering shaft (not shown) mounted for rotation inside steering column 4, and is operated by the driver of the vehicle to control the steering shaft (not shown) and so steer the wheels (not shown) of the vehicle.

Steering wheel 1 also comprises two actuating members 8 extending radially outwards from steering column 4 and by which the driver controls the transmission of the vehicle. In a variation not shown, at least one of members 8 comprises indicator lights defined, for example, by LEDs and for indicating to the driver when to operate members 8 and, therefore, the vehicle transmission.

Body 2 also comprises two control levers 9, which are housed inside respective sunken seats 10 formed in a peripheral edge of face 5, and are located on opposite sides of a longitudinal plane of symmetry of body 2 and between members 8 and the driver.

Each lever 9 is fitted in rotary manner to body 3 to rotate with respect to body 3 about a given hinge axis 11, and is fitted in sliding manner to body 3 to perform straight movements with respect to body 3 in a direction 12 parallel to axis 11.

Levers 9 allow the driver to control auxiliary devices (not shown) of the vehicle, such as, for example, direction indicators, windscreen-wipers, and/or external lighting devices (not shown).

Face 5 is also fitted with a vehicle ignition switch 13; a luminous LED display 14; and, in the example shown, two switches 15, each of which is fitted in rotary manner to face 5 to rotate, with respect to body 2 and about an axis of rotation 16 substantially parallel to axes 11, between at least two operating positions, each corresponding to a respective dynamic performance of the vehicle.

Switches 15 therefore provide for selectively controlling the dynamic performance of the vehicle as a function of the driving style selected by the driver, e.g. for driving on very low-grip road surfaces, on low-grip road surfaces, on good-grip road surfaces, in safe touring conditions, or in on-track competition conditions.

Face 5 is also fitted with two knobs 17, each of which has a longitudinal axis 18 substantially parallel to axes 16, and has a number of (in the example shown, four) selection members 19, which are arranged about axis 18 and each allow the driver to select a respective function of the vehicle, such as, for example, the volume of the vehicle radio, the air-conditioning/heating system fan, or other functions.

Each knob 17 is fitted in rotary manner to face 5 to rotate, with respect to body 2, about respective axis 18, and to selectively control the level of the function selected by members 19.

Steering wheel 1 also comprises a number of reconfigurable light buttons 20 arranged side by side and located between two selection buttons 21, which permit display of the selected vehicle function on buttons 20, such as, for example, different radio stations, or different CDs, or different interior vehicle lighting devices.

## Claims

1. A steering wheel (1) for a vehicle, the steering wheel (1) comprising:
a box body (2) housing an air bag and bounded by a front face (5) facing the driver of the vehicle;
a circular member (7) operated by a driver of the vehicle to control a steering shaft mounted for rotation inside a steering column (4) of the vehicle;
at least one control lever (9) fitted to said box body (2); and
a number of first actuating members (13, 15, 17, 20, 21) mounted on said front face (5);
the steering wheel (1) being **characterized in that:**
the box body (2) is fixed to the steering column (4); and
the first actuating members (13, 15, 17, 20, 21) also comprise at least one selection button (21) for selecting a function of the vehicle; and a number of reconfigurable light buttons (20), each for displaying the function selected by said selection button (21).

2. A steering wheel (1) as claimed in Claim 1, wherein the control lever (9) is fitted to the box body (2) to rotate, with respect to the box body (2), about a given axis of rotation (11).

3. A steering wheel (1) as claimed in Claim 1, wherein the control lever (9) is fitted to said box body (2) to perform straight movements, with respect to the box body (2), in a direction (12) substantially parallel to said axis of rotation (11).

4. A steering wheel (1) as claimed in any one of the foregoing Claims, and also comprising at least a second actuating member (8) for controlling a transmission of the vehicle and fitted to said steering column (4).

5. A steering wheel (1) as claimed in Claim 4 and also comprising luminous indicator means located on said second actuating member (8) to inform the driver of the need to activate second the actuating member (8).

6. A steering wheel (1) as claimed in any one of the foregoing Claims, wherein the first actuating members (13, 15, 17, 20, 21) comprise at least one switch (15) fitted in rotary manner to the box body (2) to rotate, with respect to the box body (2), between at least two positions, each corresponding to a respective dynamic performance of the vehicle.

7. A steering wheel (1) as claimed in Claim 6, wherein the first actuating members (13, 15, 17, 20, 21) also comprise at least one knob (17), which comprises a number of selection members (19) for selecting corresponding functions of the vehicle, and is mounted for rotation on said front face (5) to selectively control a parameter of the function selected by said selecting members (19).

8. A steering wheel (1) as claimed in Claim 6 or 7, wherein said front face (5) has a luminous information display (14).

9. A steering wheel (1) as claimed in Claim 8, wherein said display (14) is a LED display.

## Patentansprüche

1. Lenkrad (1) für ein Fahrzeug, wobei das Lenkrad (1) umfasst:
einen Gehäusekörper (2), in dem ein Airbag untergebracht ist und der durch eine Vorderseite (5), die dem Fahrer des Fahrzeugs zugewandt ist, begrenzt ist;
ein kreisförmiges Element (7), das durch einen Fahrer des Fahrzeugs betätigt wird, um eine Lenkwelle zu steuern, die in einer Lenksäule (4) des Fahrzeugs drehbar angebracht ist;
wenigstens einen Steuerhebel (9), der an dem Gehäusekörper (2) angebracht ist; und
eine Anzahl erster Betätigungselemente (13, 15, 17, 20, 21), die an der Vorderseite (5) angebracht sind;
wobei das Lenkrad (1) **dadurch gekennzeichnet ist, dass:**
der Gehäusekörper (2) an der Lenksäule (4) befestigt ist; und
die ersten Betätigungselemente (13, 15, 17, 20, 21) außerdem wenigstens eine Auswahltaste (21) umfassen, um eine Funktion des Fahrzeugs auszuwählen; und eine Anzahl umkonfigurierbarer Leuchttasten (20) umfassen, wovon jeder die durch die Auswahltaste (21) ausgewählte Funktion anzeigt.

2. Lenkrad (1) nach Anspruch 1, wobei der Steuerhebel (9) an dem Gehäusekörper (2) so angebracht ist, dass er sich in Bezug auf den Gehäusekörper (2) um eine gegebene Drehachse (11) drehen kann.

3. Lenkrad (1) nach Anspruch 1, wobei der Steuerhebel (9) an dem Gehäusekörper (2) so angebracht ist, dass er geradlinige Bewegungen in Bezug auf den Gehäusekörper (2) in einer zu der Drehachse (11) im Wesentlichen parallelen Richtung (12) ausführt.

4. Lenkrad (1) nach einem der vorhergehenden Ansprüche, das außerdem wenigstens ein zweites Betätigungselement (8) umfasst, das dazu dient, ein Getriebe des Fahrzeugs zu steuern, und an der Lenksäule (4) angebracht ist.

5. Lenkrad (1) nach Anspruch 4, das außerdem Leuchtanzeigemittel umfasst, die sich an dem zweiten Betätigungselement (8) befinden, um dem Fahrer den Bedarf an einer Betätigung des zweiten Betätigungselements (8) zu melden.

6. Lenkrad (1) nach einem der vorhergehenden Ansprüche, wobei die ersten Betätigungselemente (13, 15, 17, 20, 21) wenigstens einen Schalter (15) umfassen, der am Gehäusekörper (2) drehbar angebracht ist, damit er sich in Bezug auf den Gehäusekörper (2) zwischen wenigstens zwei Positionen drehen kann, wovon jede einem jeweiligen dynamischen Leistungsverhalten des Fahrzeugs entspricht.

7. Lenkrad (1) nach Anspruch 6, wobei die ersten Betätigungselemente (13, 15, 17, 20, 21) außerdem wenigstens einen Knopf (17) umfassen, der eine Anzahl von Auswahlelementen (19) aufweist, um entsprechende Funktionen des Fahrzeugs auszuwählen, und an der Vorderseite (5) drehbar angebracht ist, um einen Parameter der durch die Auswahlelemente (19) ausgewählten Funktion wahlweise zu steuern.

8. Lenkrad (1) nach Anspruch 6 oder 7, wobei die Vorderseite (5) eine Leuchtinformationsanzeige (14) besitzt.

9. Lenkrad (1) nach Anspruch 8, wobei die Anzeige (14) eine LED-Anzeige ist.

## Revendications

1. Volant de direction (1) d'un véhicule, le volant de direction (1) comprenant :
un boîtier (2) logeant un air bag et délimité par une face avant (5) en regard du conducteur du véhicule ;
un élément circulaire (7) commandé par un conducteur du véhicule pour commander un arbre de direction monté de manière à effectuer un mouvement de rotation à l'intérieur d'une colonne de direction (4) du véhicule ;
au moins un levier de commande (9) fixé audit boîtier (2) ; et
un certain nombre de premiers organes d'actionnement (13, 15, 17, 20, 21) montés sur ladite face avant (5) ;
le volant de direction (1) étant **caractérisé en ce que :**
le boîtier (2) est fixé à la colonne de direction (4) ; et
les premiers organes d'actionnement (13, 15, 17, 20, 21) comprennent, en outre, au moins un bouton de sélection (21) pour sélectionner une fonction du véhicule ; et un certain nombre de boutons lumineux (20) reconfigurables, chacun destiné à afficher la fonction sélectionnée par ledit bouton de sélection (21).

2. Volant de direction (1) selon la revendication 1, dans lequel le levier de commande (9) est fixé au boîtier (2) pour effectuer une rotation, par rapport au boîtier (2), autour d'un axe de rotation (11) donné.

3. Volant de direction (1) selon la revendication 1, dans lequel le levier de commande (9) est fixé audit boîtier (2) pour exécuter des mouvements rectilignes, par rapport au boîtier (2), dans une direction (12) sensiblement parallèle audit axe de rotation (11).

4. Volant de direction (1) selon l'une quelconque des revendications précédentes, et comprenant, en outre, au moins un second organe d'actionnement (8) conçu pour commander une transmission du véhicule et fixé à ladite colonne de direction (4).

5. Volant de direction (1) selon la revendication 4 et comprenant, en outre, un indicateur lumineux situé sur ledit second organe d'actionnement (8) pour informer le conducteur de la nécessité d'activer le second organe d'actionnement (8).

6. Volant de direction (1) selon l'une quelconque des revendications précédentes, dans lequel les premiers organes d'actionnement (13, 15, 17, 20, 21) comprennent au moins un commutateur (15) monté de manière rotative sur le boîtier (2) afin d'effectuer une rotation, par rapport au boîtier (2), entre au moins deux positions, chacune correspondant à une performance dynamique respective du véhicule.

7. Volant de direction (1) selon la revendication 6, dans lequel les premiers organes d'actionnement (13, 15, 17, 20, 21) comprennent, en outre, au moins un bouton (17) qui comprend un certain nombre d'organes de sélection (19) pour sélectionner des fonctions correspondantes du véhicule, et est monté pour rotation sur ladite face avant (5) pour commander, de manière sélective, un paramètre de la fonction sélectionnée par lesdits organes de sélection (19).

8. Volant de direction (1) selon la revendication 6 ou 7, dans lequel ladite face avant (5) comprend un affichage d'information lumineuse (14).

9. Volant de direction (1) selon la revendication 8, dans lequel ledit affichage (14) est un affichage à LED.
